# EUROPEAN PATENT APPLICATION

(11) **EP 4 755 971 A1**
(43) Date of publication of application: **10.06.2026**
(21) Application number: 24940615.8
(22) Date of filing: 10.05.2024
(51) Int. Cl.: C08L 21/00, B60C 1/00, C08K 5/09, C08K 5/103

(54) **RUBBER COMPOSITION**

(71) Applicant: UBE Elastomer Co. Ltd., Tokyo 105-0023 (JP); Thai Synthetic Rubbers Co., Ltd., Bangkok 10500 (TH)
(72) Inventor: TAKAHASHI, Yuuki, Ichihara-shi, Chiba 290-8550 (JP); MATSUMOTO, Misaki, Ichihara-shi, Chiba 290-8550 (JP); RATCHANEEKORN, Thanedgunbaworn, Muang Rayong District,Rayong Province 21000 (TH); NIRATCHAPORN, Rimdusit, Muang Rayong District,Rayong Province 21000 (TH)
(74) Representative: Plougmann Vingtoft a/s
(86) International application number: PCT/JP2024/017476
(87) International publication number: WO 2025/234106

(57) **Abstract**

A rubber composition, containing a vulcanizable rubber component, a fatty acid having 8 or more and 16 or less carbon atoms, and a natural triglyceride oil, wherein
a content of the fatty acid is 0.1 parts by mass or more and 3.0 parts by mass or less based on 100 parts by mass of the vulcanizable rubber component. The content of the natural triglyceride oil is preferably 2.0 parts by mass or more and 10.0 parts by mass or less based on 100 parts by mass of the rubber component. The natural triglyceride oil is also preferably at least one selected from vegetable oils.

## Description

### [Technical Field]

The present invention relates to a rubber composition containing a fatty acid and a natural triglyceride oil.

### [Background Art]

To improve tire performance, development relating to rubber compositions has been made for a long time, and to achieve characteristics as high as possible, research and development have been continuously conducted to date. In recent years, abrasion resistance is required in a higher level than ever, along with an increase in the vehicle body weight due to the spread of electric vehicles.

Techniques for improving abrasion resistance by using a specific additive in a rubber composition have been developed. Examples thereof include various cases such as a method of adding a resin (Patent Literature 1 and Patent Literature 2) and a method of adding a specific metal compound (Patent Literature 3).

Patent Literature 4 describes a technique in which an oil extended rubber using coconut oil is used. In recent years, a technique for improving abrasion resistance using an environmentally friendly material is required, and from this viewpoint, the technique in Patent Literature 4 is more advantageous than the techniques in Patent Literatures 1 to 3.

### [Citation List]

### [Patent Literature]

[Patent Literature 1] US 2023/0331963 A1
[Patent Literature 2] Japanese Patent Laid-Open No. 2023-142813
[Patent Literature 3] Japanese Patent Laid-Open No. 2023-124712
[Patent Literature 4] US 2018/244103 A1

### [Summary of Invention]

However, the invention described in Patent Literature 4 does not sufficiently examine a configuration of a rubber composition that can achieve both abrasion resistance and filler dispersibility.

The present inventors have found that both the filler dispersibility and the abrasion resistance can be achieved by containing a specific fatty acid and a natural triglyceride oil.

The present invention provides the following.
[1] A rubber composition containing a vulcanizable rubber component, a fatty acid having 8 or more and 16 or less carbon atoms, and a natural triglyceride oil, wherein
   a content of the fatty acid is 0.1 parts by mass or more and 3.0 parts by mass or less based on 100 parts by mass of the vulcanizable rubber component.
[2] The rubber composition according to [1], wherein a content of the natural triglyceride oil is 2.0 parts by mass or more and 10.0 parts by mass or less based on 100 parts by mass of the vulcanizable rubber component.
[3] The rubber composition according to [1] or [2], wherein the natural triglyceride oil is at least one selected from vegetable oils.
[4] The rubber composition according to any one of [1] to [3], wherein the fatty acid having 8 or more and 16 or less carbon atoms is at least one selected from caprylic acid, capric acid, lauric acid, myristic acid, and palmitic acid.
[5] The rubber composition according to any one of [1] to [4], wherein the vulcanizable rubber component contains polybutadiene.
[6] The rubber composition according to any one of [1] to [5], comprising a filler.
[7] The rubber composition according to [6], comprising carbon black as the filler.
[8] The rubber composition according to any one of [1] to [7], wherein the rubber composition is for tires.
[9] A tire using the rubber composition according to any one of [1] to [8].

### [Description of Embodiments]

Hereinafter, the present invention will be described based on preferred embodiments.

The rubber composition of the present invention contains a vulcanizable rubber component, a fatty acid having 8 or more and 16 or less carbon atoms, and a natural triglyceride oil.

### <Vulcanizable rubber component>

Examples of the vulcanizable rubber component in the present invention include natural rubber and synthesis rubber, and specific examples thereof include polymers of diene-based monomers, such as polybutadiene rubber, natural rubber, isoprene rubber, butyl rubber, and chloroprene rubber; acrylonitrile-diene copolymer rubbers such as acrylonitrile butadiene rubber (NBR), nitrile chloroprene rubber, and nitrile isoprene rubber; styrene-diene copolymer rubbers such as emulsion polymerization or solution polymerization styrene butadiene rubber (SBR), styrene chloroprene rubber, and styrene isoprene rubber; and ethylene propylene diene rubber (EPDM).

The vulcanizable rubber component preferably contains polybutadiene rubber, in terms of exerting the effect of the present invention excellent in abrasion resistance and filler dispersibility. Examples of the polybutadiene rubber include polybutadiene polymerized by using a cobalt compound and an organometallic compound containing a metal from Group 1, Group 2, or Group 13 of the periodic table as catalysts. Examples of the cobalt compound include a compound soluble in an inert solvent composed mainly of a hydrocarbon solvent or in liquid 1,3-butadiene, or dispersible therein homogeneously. Examples thereof include halogenated cobalt such as cobalt chloride and cobalt bromide; cobalt nitrate; cobalt salts of organic carboxylic acids having 6 or more carbon atoms, such as cobalt octoate, cobalt naphthenate, cobalt benzoate; cobalt salts having less than 6 carbon atoms, such as cobalt acetate; acid anhydrides such as cobalt malonate; β-diketone complexes of cobalt, such as cobalt(II) acetylacetonate and cobalt(III) acetylacetonate; β-keto acid ester complexes of cobalt, such as a cobalt acetoacetate ethyl ester complex; organic base complexes such as pyridine complexes and picoline complexes of cobalt; ethyl alcohol complexes of cobalt; cobalt pyridine chloride complexes; and cobalt chloride ethyl alcohol complexes. The cobalt compounds may be used singly or in combination of two or more thereof.

As the organometallic compound of a Group 1, Group 2, or Group 13 element of the periodic table, an organolithium, an organomagnesium, an organoaluminum, or the like is used. Among them, an organoaluminum such as trialkylaluminum, dialkylaluminum chloride, dialkylaluminum bromide, alkylaluminum sesquichloride, or alkylaluminum sesquibromide is preferred as the organometallic compound. Examples of specific compounds of the organoaluminum include trialkylaluminum such as trimethylaluminum, triethylaluminum, triisobutylaluminum, trihexylaluminum, trioctylaluminum, and tridecylaluminum.

Furthermore, examples of the organoaluminum also include dialkylaluminum chlorides such as dimethylaluminum chloride and diethylaluminum chloride, organic aluminum halogen compounds such as ethylaluminum sesquichloride and ethylaluminum dichloride, and hydrogenated organic aluminum compounds such as diethylaluminum hydride, diisobutylaluminum hydride, and ethylaluminum sesquihydride. The organometallic compounds may be used singly or in combination of two or more thereof.

As polybutadiene, a polybutadiene (including a terminally modified polybutadiene) obtained by using a nickel catalyst such as an organic carboxylate of nickel or an organic complex salt of nickel, a lithium catalyst such as an organic lithium compound, or a neodymium catalyst such as an organic carboxylate of neodymium or an organic complex salt of neodymium instead of the cobalt compound may be used.

A Mooney viscosity (ML_{(1+4)100°C}) of the polybutadiene rubber is not particularly limited, and is preferably 20 or more and 100 or less, more preferably 30 or more and 90 or less, and particularly preferably 40 or more and 80 or less. The Mooney viscosity (ML_{(1+4)100°C}) is measured at 100°C in accordance with JIS-K6300.

In addition, the polybutadiene rubber preferably has a cis-1,4 bond content in microstructure analysis of 95% by mass or more, and more preferably 97% by mass or more. The microstructure of polybutadiene can be determined by infrared absorption spectrum analysis. Specifically, the microstructure of the polymer is determined from an absorption intensity ratio of the peak position (cis: 740 cm⁻¹) derived from the microstructure.

The rubber composition of the present invention preferably contains, in addition to the polybutadiene rubber, a vulcanizable rubber component other than the polybutadiene rubber as the vulcanizable rubber component, in terms of further exerting the effect of the present invention excellent in abrasion resistance and filler dispersibility. As the vulcanizable rubber component other than the polybutadiene rubber, one or more selected from natural rubber, isoprene rubber, acrylonitrile butadiene rubber, and styrene butadiene rubber are preferred, and one or more selected from solution polymerization styrene butadiene rubber (s-SBR), natural rubber, and isoprene rubber are further preferred. By combining the polybutadiene rubber and these rubbers, a rubber composition further excellent in abrasion resistance and filler dispersibility can be obtained. The rubbers other than the polybutadiene rubber may be used singly or in combination of two or more thereof.

A Mooney viscosity (ML_{(1+4)100°C}) of the vulcanizable rubber component other than the polybutadiene rubber is not particularly limited, and is preferably 20 or more and 100 or less, more preferably 30 or more and 90 or less, and particularly preferably 40 or more and 80 or less. The Mooney viscosity (ML_{(1+4)100°C}) is measured at 100°C in accordance with JIS-K6300.

A mass ratio of the polybutadiene rubber to the vulcanizable rubber component other than the polybutadiene rubber (polybutadiene rubber/vulcanizable rubber component other than polybutadiene rubber) is preferably 5/95 to 90/10, more preferably 10/90 to 60/40, and still more preferably 20/80 to 50/50. When the ratio of the polybutadiene rubber to the vulcanizable rubber component other than the polybutadiene rubber is within the above range, a rubber composition further excellent in abrasion resistance can be obtained.

### <Natural triglyceride oil>

The natural triglyceride oil is an ester compound of a naturally derived fatty acid and glycerin. The main component of the natural triglyceride oil is triglyceride (tri-O-acylglycerol). The natural triglyceride oil is preferably derived from animals or plants. Particularly preferred examples of the natural triglyceride oil include vegetable oils such as avocado oil, apricot oil, corn oil, soybean oil, camellia oil, rapeseed oil, palm oil, palm kernel oil, peanut oil, castor oil, and sunflower oil. The natural triglyceride oil can exclude coconut oil. Among them, at least one selected from soybean oil, palm kernel oil, and palm oil is preferably used in the present invention, in terms of achieving both the filler dispersibility and abrasion resistance. The natural triglyceride oil preferably has a melting point of -20 to 50°C. The melting point of an oil/fat is measured in accordance with the standard methods for the analysis of fats, oils and related materials 2.2.4.2-1996 (edited by Japan Oil Chemists' Society, 2003).

Examples of typical process oils include aromatic, naphthenic, and paraffinic oils. Unlike the above, the present invention uses a natural triglyceride oil in combination with a specific fatty acid, and thus can obtain the effect of achieving both the filler dispersibility of the rubber composition and the abrasion resistance of a vulcanizate.

The natural triglyceride oil may be a modified oil/fat obtained by subjecting a raw material oil/fat to one or two or more processes selected from fractionation, hydrogenation, and transesterification, or an oil/fat not being subjected to these processes. However, the natural triglyceride oil is preferably an oil/fat not being subjected to one or two or more processes selected from fractionation, hydrogenation, and transesterification, in terms of an environmentally friendly material and a low cost in availability.

A content of the natural triglyceride oil as used herein is an amount in terms of triglyceride. It is preferred that no fatty acid is substantially contained in the natural triglyceride oil used in the present invention, and for example, a fatty acid content is preferably 1000 ppm by mass or less, more preferably 400 ppm by mass or less, and still more preferably 100 ppm by mass or less. In each of the following examples, one having a fatty acid content of less than 100 ppm by mass is used.

In the rubber composition of the present invention, the content of the natural triglyceride oil is preferably 2.0 parts by mass or more and 10.0 parts by mass or less, and more preferably 3.0 parts by mass or more and 8.0 parts by mass or less based on 100 parts by mass of the vulcanizable rubber component. This range is suitable because both the filler dispersibility and abrasion resistance can be achieved.

The fatty acid used in the present invention has 8 to 16 carbon atoms. The fatty acid may be a saturated fatty acid or an unsaturated fatty acid. The derivation of the fatty acid is not particularly limited. The fatty acid may be a liberated fatty acid that is originally contained in the natural triglyceride oil, or a fatty acid may be added later.

Examples of the saturated fatty acid having 8 to 16 carbon atoms include caprylic acid (8 carbon atoms), pelargonic acid (9 carbon atoms), capric acid (10 carbon atoms), lauric acid (12 carbon atoms), myristic acid (14 carbon atoms), and palmitic acid (16 carbon atoms).

Examples of the unsaturated fatty acid having 8 to 16 carbon atoms include myristoleic acid (14 carbon atoms), palmitoleic acid (16 carbon atoms), and sapienic acid (16 carbon atoms).

In the present invention, one or two or more of these may be used in combination. Especially, among fatty acids having 8 to 16 carbon atoms, one having 10 to 14 carbon atoms is preferably used because filler dispersibility is further excellent.

From the viewpoint of achieving better filler dispersibility, when any of the fatty acids having 8, 10, 12, 14, or 16 carbon atoms is used in the present invention, at least one of the fatty acids preferably has a high purity. For example, a content of any one fatty acid having 8, 10, 12, 14, or 16 carbon atoms among the fatty acids having 8 to 16 carbon atoms preferably occupies 60% by mass or more, more preferably 70% by mass or more, still more preferably 80% by mass or more, and particularly preferably 90% by mass or more of the total amount of the fatty acids having 8 to 16 carbon atoms.

From the viewpoint of achieving both the filler dispersibility and abrasion resistance, the content of the fatty acid having 8 to 16 carbon atoms in the rubber composition of the present invention is preferably 0.1 parts by mass or more and 3.0 parts by mass or less, more preferably 0.20 parts by mass or more and 2.5 parts by mass or less, and particularly preferably 0.3 parts by mass or more and 2.0 parts by mass or less based on 100 parts by mass of the vulcanizable rubber component.

In particular, from the viewpoint of achieving both the filler dispersibility and abrasion resistance, the total amount of the natural triglyceride oil and the fatty acid having 8 to 16 carbon atoms in the present invention is preferably 2 parts by mass or more and 12 parts by mass or less, more preferably 3 parts by mass or more and 10 parts by mass or less, and particularly preferably 4 parts by mass or more and 8 parts by mass or less based on 100 parts by mass of the vulcanizable rubber component. The total amount of the natural triglyceride oil and the fatty acid may be 12 parts by mass or less or 10 parts by mass or less based on 100 parts by mass of the vulcanizable rubber component.

With respect to the compounding ratio of the natural triglyceride oil and the fatty acid having 8 or more and 16 or less carbon atoms, (the fatty acid having 8 or more and 16 or less carbon atoms/the natural triglyceride oil) is preferably 0.5/99.5 to 50/50, more preferably 1/99 to 40/60, still more preferably 1.5/98.5 to 30/70, even more preferably 2/98 to 25/75, particularly preferably 3/97 to 20/80, and most preferably 4/96 to 12/88 in a mass ratio.

### <Rubber composition>

The rubber composition of the present invention preferably contains a filler in terms that a specific filler dispersibility effect is exerted. Examples of the filler include inorganic fillers such as carbon black, silica, calcium carbonates such as activated calcium carbonate, ultrafine particle magnesium silicate, basic magnesium carbonate, clay, diatomaceous earth, and organic fillers such as recycled rubber and powdered rubber.

In the present invention, an inorganic filler is preferably contained, and carbon black is more preferably contained, in terms of the industrial applicability of an effect of improving physical properties by an improvement in filler dispersibility. Carbon black having a particle size of 90 nm or less and a dibutyl phthalate (DBP) oil absorption amount of 70 ml/100 g or more is particularly preferred, and examples thereof include FEF, FF, GPF, SAF, ISAF, SRF, and HAF. The particle size of carbon black is a number average particle size, and is measured with a transmission electron microscope.

In the rubber composition of the present invention, the content of carbon black is preferably 1 to 150 parts by mass, more preferably 30 to 100 parts by mass, and still more preferably 50 to 80 parts by mass based on 100 parts by mass of the vulcanizable rubber component. When the content of carbon black is within the above range, a rubber composition further excellent in abrasion resistance can be obtained.

Silica is not particularly limited, and examples thereof include Nipsil VN3 (manufactured by TOSOH SILICA CORPORATION) and Ultrasil 7000 GR (manufactured by Evonik Degussa Japan Co., Ltd.). Silica may be used singly or in combination of two or more thereof.

The content of the filler is preferably 20 to 70 parts by mass, and more preferably 30 to 60 parts by mass based on 100 parts by mass of the rubber component.

The rubber composition may also be compounded with compounding agents normally used in the rubber industry, such as a vulcanizing agent, a vulcanization aid, an antioxidant, a silane coupling agent, an organic reinforcing material, process oil other than natural triglyceride oil, zinc oxide, and stearic acid if necessary. Other components may be used singly or in combination of two or more thereof.

Examples of the vulcanizing agent include well-known vulcanizing agents, for example, sulfur, an organic peroxide, a resin vulcanizing agent, and metal oxides such as magnesium oxide.

Examples of the vulcanization assistant include well-known vulcanization aids, for example, aldehydes, ammonia, amines, guanidines, thioureas, thiazoles, thiurams, dithiocarbamates, and xanthates.

Examples of the antioxidant include amine/ketone-based, imidazole-based, amine-based, phenol-based, sulfur-based, and phosphorus-based agents.

Examples of the silane coupling agent include organic silicon compounds represented by a general formula R⁷ₙSiX₄₋ₙ, in which R⁷ is an organic group having 1 to 20 carbon atoms and having a reactive group selected from a vinyl group, an acyl group, an allyl group, an allyloxy group, an amino group, an epoxy group, a mercapto group, a chloro group, an alkyl group, a phenyl group, a hydrogen, a styryl group, a methacryl group, an acrylic group, and an ureide group, X is a hydrolysis group selected from a chloro group, an alkoxy group, an acetoxy group, an isopropenoxy group, and an amino group, and n represents an integer of 1 to 3. R⁷ in the above silane coupling agent preferably contains a vinyl group and/or a chloro group.

The amount of the silane coupling agent added is preferably 0.2 to 20% by weight, and more preferably 5 to 15% by weight based on the amount of the filler. When the amount of the silane coupling agent added is lower than the above range, scorching may be caused. When the amount is higher than the above range, a reduction in tensile characteristics and elongation may be caused.

Examples of the organic reinforcing material include a polyethylene resin, a polypropylene resin, a high styrene resin, a phenol resin, lignin, a modified melamine resin, a coumarone indene resin, and a petroleum resin.

The rubber composition may contain a fatty acid other than one having 8 to 16 carbon atoms. Examples of the fatty acid other than one having 8 to 16 carbon atoms include a fatty acid having 3 or more and less than 8 carbon atoms, and a fatty acid having more than 16 and 24 or less carbon atoms, such as stearic acid.

The rubber composition is obtained by kneading the above respective components using a Banbury mixer, open roll, kneader, twin-screw kneader, or the like, that are used normally. For example, in the case of a rubber composition containing a vulcanizing agent and a vulcanization accelerator, additives other than the vulcanizing agent and the vulcanization accelerator, and an arbitrary filler are added to and mixed with a rubber component in the first kneading (non-productive mixing). Then, the vulcanizing agent and the vulcanization accelerator are added to and mixed with the obtained mixture in the second kneading (final mixing) to prepare an unvulcanized rubber composition.

The rubber composition of the present invention is a rubber composition excellent in abrasion resistance and filler dispersibility, and is thus suitable for use in tire applications. For tires, the rubber composition of the present invention can be used for members of tires (e.g., treads (single layer structure), surface layers of treads of double layer structure (cap treads), inner layers (base treads), sidewalls, carcasses, belts, and beads). Except for tires, the rubber composition of the present invention can also be used for golf balls, antivibration rubbers, belts, hoses, seismic isolation rubbers, rubber crawlers, footwear members, and the like. In particular, the rubber composition of the present invention is suitable for tire tread applications.

### [Examples]

Hereinafter, the present invention will be described further in detail by way of examples. However, the scope of the present invention is not limited to such examples. Unless otherwise specified, "%" means "% by mass". The unit of compounding in Tables 1 to 3 is part by mass.

In the following examples, the physical properties of the rubber composition were measured by the following methods.

### (Payne effect (filler dispersibility))

The dispersibility of the filler in a vulcanizate was evaluated by the strain dependence of the storage elastic modulus (G') (Payne effect). Dynamic strain analysis was performed using a rubber process analyzer RPA-2000 manufactured by Alpha Technologies under conditions of 150°C and a frequency of 1 Hz. The Payne effect was evaluated by a ratio of G' at a strain of 25% to G' at a strain of 0.5% (G' 0.5%/ G' 25%). In Tables 1 to 3, the measured Payne effect values are shown as INDEX by setting each comparative examples (Comparative Example 1 in Table 1, Comparative Example 2 in Table 2, and Comparative Example 6 in Table 3) to an index of 100. The larger the INDEX, the more excellent the dispersibility of the filler.

### (DIN abrasion (abrasion resistance))

As an index of the abrasion resistance of a vulcanizate, the DIN abrasion index was measured in accordance with the measurement method specified in JIS K 6264 (unit (cc)). In Table 1, the measured DIN abrasion index values are shown as INDEX by setting each comparative examples (Comparative Example 1 in Table 1, Comparative Example 2 in Table 2, and Comparative Example 6 in Table 3) to an index of 100. The larger the INDEX, the more excellent the abrasion resistance.

### <Examples 1 to 3 and Comparative Example 1>

The vulcanizates were prepared according to Table 1. 30 parts by mass of the polybutadiene rubber described in Table 1 (UBE Corporation: BR150L, Mooney viscosity (ML_{(1+4)100°C}): 43, cis-1,4 bond content: 98% by mass) and 70 parts by mass of a natural rubber in which the Mooney viscosity (ML_{(1+4)100°C}) was set to 70 by mastication were added into 250cc size Labo Plastomill heated to 90°C in advance, and the mixture was kneaded for 1 minutes. Then, 50 parts by mass of carbon black (ISAF, Mitsubishi Chemical Corporation: DIABLACK I), 6 parts by mass of each oil described in Table 1, 0.45 parts by mass of lauric acid, 3 parts by mass of zinc oxide (ZnO#1), 2 parts by mass of stearic acid (manufactured by Kao Corporation), and 2 parts by mass of an anti-aging agent (manufactured by SUMITOMO CHEMICAL COMPANY, LIMITED.: trade name: Antigen 6C) were added and kneaded. After 5 minutes in total from the initiation of kneading, the kneaded compound was taken out from Labo Plastomill. Then, the kneaded compound taken out was wound around a 6-inch roll, 1.5 parts by mass of powdered sulfur as a vulcanizing agent and 1 part by mass of a vulcanization accelerator (OUCHI SHINKO CHEMICAL INDUSTRIAL CO., LTD.: NOCCELER NS) were added while roll kneading, and the mixing was done for about 5 minutes. Then, the mixture was press vulcanized at a temperature of 150°C to obtain a vulcanized test piece. With respect to the obtained test piece, physical properties were evaluated by the above methods. The vulcanization time was twice the time of vulcanization characteristics t90 at 150°C determined with a viscoelasticity measuring apparatus (RPA2000 manufactured by Alpha Technologies). The evaluation results of the physical properties of the vulcanizates of the obtained rubber compositions are shown in Table 1.

As the aromatic oil, VivaTech500 manufactured by H&R was used.

### [Table 1]

**[Table 1]**

| | | | Example 1 | Example 2 | Example 3 | Comparative Example 1 |
|---|---|---|---|---|---|---|
| Natural rubber | | | 70 | 70 | 70 | 70 |
| Polybutadiene rubber: BR150L | | | 30 | 30 | 30 | 30 |
| Carbon black | | | 50 | 50 | 50 | 50 |
| Process oil | | | | | | |
| | Palm kernel oil | | 6 | | | |
| | Soybean oil | | | 6 | | |
| | Palm oil | | | | 6 | |
| | Aromatic oil | | | | | 6 |
| Fatty acid | | | | | | |
| | Lauric acid (C12) | | 0.45 | 0.45 | 0.45 | 0.45 |
| Zinc oxide | | | 3 | 3 | 3 | 3 |
| Stearic acid | | | 2 | 2 | 2 | 2 |
| Antioxidant | | | 2 | 2 | 2 | 2 |
| Sulfur | | | 1.5 | 1.5 | 1.5 | 1.5 |
| Vulcanization accelerator | | | 1 | 1 | 1 | 1 |
| | Payne effect (INDEX) | | 113 | 109 | 109 | 100 |
| | | DIN abrasion (INDEX) | 107 | 103 | 113 | 100 |

As is apparent from Table 1 described above, both filler dispersibility and abrasion resistance can be achieved by using a natural triglyceride oil in the rubber composition that contains a rubber component containing polybutadiene rubber and a specific fatty acid.

### <Examples 4, 5, 6, and 7, and Comparative Examples 2 to 5>

In Examples 4, 5, 6, and 7 and Comparative Examples 3 to 5, a rubber composition and a vulcanized test piece were obtained in the same manner as in Example 1, except that the type of fatty acid in Example 1 was changed to those described in Table 2, and evaluated.

In Comparative Example 2, a rubber composition and a vulcanized test piece were obtained in the same manner as in Example 1, except that lauric acid was not added, and the physical properties thereof were evaluated.

The evaluation results of the physical properties of the vulcanizates of the obtained rubber compositions are shown in Table 2.

**[Table 2]**

| | Example 4 | Example 5 | Example 1 | Example 6 | Example 7 | Comparative Example 2 | Comparative Example 3 | Comparative Example 4 | Comparative Example 5 |
|---|---|---|---|---|---|---|---|---|---|
| Natural rubber | 70 | 70 | 70 | 70 | 70 | 70 | 70 | 70 | 70 |
| Polybutadiene rubber: BR150L | 30 | 30 | 30 | 30 | 30 | 30 | 30 | 30 | 30 |
| Carbon black | 50 | 50 | 50 | 50 | 50 | 50 | 50 | 50 | 50 |
| Process oil | | | | | | | | | |
| Palm kernel oil | 6 | 6 | 6 | 6 | 6 | 6 | 6 | 6 | 6 |
| Fatty acid | | | | | | | | | |
| Butyric acid (C4) | | | | | | | 0.45 | | |
| Caproic acid (C6) | | | | | | | | 0.45 | |
| Caprylic acid (C8) | 0.45 | | | | | | | | |
| Capric acid (C10) | | 0.45 | | | | | | | |
| Lauric acid (C12) | | | 0.45 | | | | | | |
| Myristic acid (C14) | | | | 0.45 | | | | | |
| Palmitic acid (C16) | | | | | 0.45 | | | | |
| Stearic acid (C18) | | | | | | | | | 0.45 |
| Zinc oxide | 3 | 3 | 3 | 3 | 3 | 3 | 3 | 3 | 3 |
| Stearic acid | 2 | 2 | 2 | 2 | 2 | 2 | 2 | 2 | 2 |
| Antioxidant | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 |
| Vulcanization accelerator | 1 | 1 | 1 | 1 | 1 | 1 | 1 | 1 | 1 |
| Payne effect (INDEX) | 103 | 134 | 110 | 109 | 103 | 100 | 117 | 126 | 100 |
| DIN abrasion (INDEX) | 105 | 102 | 105 | 105 | 105 | 100 | 100 | 100 | 105 |

The results from Table 2 show that both filler dispersibility and abrasion resistance can be achieved when a fatty acid having 8 or more and 16 or less carbon atoms is contained in the rubber composition that contains a rubber component containing polybutadiene rubber and a natural triglyceride oil.

### <Examples 8 and 9 and Comparative Examples 6 and 7>

In Examples 8 and 9 and Comparative Examples 6 and 7, the contents of the natural triglyceride oil and the fatty acid having 8 or more and 16 or less carbon atoms in Example 1 were changed to the amounts shown in Table 3. The rubber compositions were obtained in the same manner as in Example 1, except for the above, and the physical properties thereof were evaluated.

The evaluation results of the physical properties of the vulcanizates of the obtained rubber compositions are shown in Table 3.

**[Table 3]**

| | | Example 8 | Example 1 | Example 9 | Comparative Example 6 | Comparative Example 7 |
|---|---|---|---|---|---|---|
| Natural rubber | | 70 | 70 | 70 | 70 | 70 |
| Polybutadiene rubber: BR150L | | 30 | 30 | 30 | 30 | 30 |
| Carbon black | | 50 | 50 | 50 | 50 | 50 |
| Process oil | | | | | | |
| | Palm kernel oil | 6.32 | 6 | 4.84 | 6.45 | 3.23 |
| Fatty acid | | | | | | |
| | Lauric acid (C12) | 0.13 | 0.45 | 1.61 | 0 | 3.22 |
| Zinc oxide | | 3 | 3 | 3 | 3 | 3 |
| Stearic acid | | 2 | 2 | 2 | 2 | 2 |
| Antioxidant | | 2 | 2 | 2 | 2 | 2 |
| Sulfur | | 1.5 | 1.5 | 1.5 | 1.5 | 1.5 |
| Vulcanization accelerator | | 1 | 1 | 1 | 1 | 1 |
| | Payne effect (INDEX) | 106 | 110 | 101 | 100 | 110 |
| | DIN abrasion (INDEX) | 100 | 103 | 102 | 100 | 98 |

As shown in Table 3 above, filler dispersibility can be improved, and both filler dispersibility and abrasion resistance can be achieved by setting the amount of the fatty acid having 8 or more and 16 or less carbon atoms added to a range of 0.1 to 3 parts by mass based on 100 parts by mass of the rubber component.

### [Industrial Applicability]

According to the present invention, a rubber composition that achieves both excellent filler dispersibility and excellent abrasion resistance is provided.

## Claims

1. A rubber composition, comprising a vulcanizable rubber component, a fatty acid having 8 or more and 16 or less carbon atoms, and a natural triglyceride oil,
wherein
a content of the fatty acid is 0.1 parts by mass or more and 3.0 parts by mass or less based on 100 parts by mass of the vulcanizable rubber component.

2. The rubber composition according to claim 1, wherein a content of the natural triglyceride oil is 2.0 parts by mass or more and 10.0 parts by mass or less based on 100 parts by mass of the vulcanizable rubber component.

3. The rubber composition according to claim 1 or 2, wherein the natural triglyceride oil is at least one selected from vegetable oils.

4. The rubber composition according to claim 1 or 2, wherein the fatty acid having 8 or more and 16 or less carbon atoms is at least one selected from caprylic acid, capric acid, lauric acid, myristic acid, and palmitic acid.

5. The rubber composition according to claim 1 or 2, wherein the vulcanizable rubber component contains polybutadiene.

6. The rubber composition according to claim 1 or 2, comprising a filler.

7. The rubber composition according to claim 6, comprising carbon black as the filler.

8. The rubber composition according to claim 1 or 2, wherein the rubber composition is for tires.

9. A tire using the rubber composition according to claim 1 or 2.
